# EUROPEAN PATENT APPLICATION

(11) **EP 2 530 931 A2**
(43) Date of publication of application: **05.12.2012**
(21) Application number: 12160831.9
(22) Date of filing: 22.03.2012
(51) Int. Cl.: H04N 5/76, H04N 21/81, H04N 21/44, H04N 21/433, H04N 21/845

(54) **Recording and reproducing apparatus and recording and reproducing method**

(30) Priority: 31.05.2011 JP 2011122958
(71) Applicant: Kabushiki Kaisha Toshiba, Tokyo 105-8001 (JP)
(72) Inventor: Yano, Katsuhisa, Tokyo, 105-8001 (JP)
(74) Representative: Henkel, Breuer & Partner

(57) **Abstract**

According to one embodiment, a recording and reproducing apparatus includes: an image feature quantity acquiring section configured to acquire image feature quantities of image frames of programs; a similar image frame detecting section configured to detect similar image frames that are identical or similar to each other in image feature quantities from the image frames of the programs; an overlap interval detecting section configured to detect overlap intervals of continuous intervals where similar image frames continue of recorded programs; and an overlap number calculating section configured to calculate an overlap number of each of sets of overlap intervals.

## Description

### CROSS REFERENCE TO RELATED APPLICATION(S)

The application is based upon and claims the benefit of priority from Japanese Patent Application No. 2011-122958 filed on May 31, 2011, the entire contents of which are incorporated herein by reference.

### BACKGROUND

### 1. Field

The present invention relates to a recording and reproducing apparatus and a recording and reproducing method which can record and reproduce broadcast programs.

### 2. Description of the Related Art

In recent years, the ground-wave digital broadcast and the BS/CS digital broadcast have come to be used in full scale and the environment that allows viewing of a large number of programs with high image and sound quality has thereby been established. The digital broadcast is provided with the mechanism for presenting an EPG (electronic program guide), whereby a program table covering programs to be broadcast about one week later can be displayed and a user can display particulars (e. g., a broadcast time slot and persons who appear) of a program, search for information he or she wants to know about a program, and make a reservation for viewing or recording of a program.

As the number of channels increases, the total broadcast time of programs a user wants to view increases and overlap between broadcast time slots comes to occur. As a result, users have come to more often record a program and view it later in a convenient time. In this connection, digital broadcast receivers which can record programs on plural channel simultaneously using plural tuners and a recording device having a relatively large storage capacity are now on the market.

### BRIEF DESCRIPTION OF THE DRAWINGS

A general configuration that implements the various feature of embodiments will be described with reference to the drawings. The drawings and the associated descriptions are provided to illustrate embodiments and not to limit the scope of the embodiments.
Fig. 1 is a perspective view showing an appearance of a recording and reproducing apparatus according to an embodiment;
Fig. 2 is a block diagram showing the configuration of the recording and reproducing apparatus according to the embodiment;
Fig. 3 shows a general appearance of a remote controller used in the embodiment;
Fig. 4 is a functional block diagram of a similar image acquiring section according to the embodiment;
Fig. 5 shows example continuous intervals of similar image frame;
Fig. 6 illustrates overlap intervals and an overlap number;
Fig. 7 is another chart illustrating the overlap intervals and the overlap number;
Fig. 8 is a further chart illustrating the overlap intervals and the overlap number;
Fig. 9 is a flowchart of an example similar image frame detection process;
Fig. 10 is a flowchart of an example ranking process; and
Fig. 11 shows a picture displayed on a screen in which thumbnails of pieces of video including ranked overlap intervals are arranged.

### DETAILED DESCRIPTION

According to one embodiment of the invention, a recording and reproducing apparatus includes: an image feature quantity acquiring section configured to acquire image feature quantities of image frames of programs; a similar image frame detecting section configured to detect similar image frames that are identical or similar to each other in image feature quantities from the image frames of the programs; an overlap interval detecting section configured to detect overlap intervals of continuous intervals where similar image frames continue of recorded programs; and an overlap number calculating section configured to calculate an overlap number of each of sets of overlap intervals.

According to another embodiment of the invention, a recording and reproducing method of a recording and reproducing apparatus capable of recording and reproducing a program, includes: acquiring image feature quantities of image frames of programs; detecting similar image frames that are identical or similar to each other in image feature quantities from the image frames of the programs; detecting overlap intervals of continuous intervals where similar image frames continue of recorded programs; and calculating an overlap number of each of sets of overlap intervals.

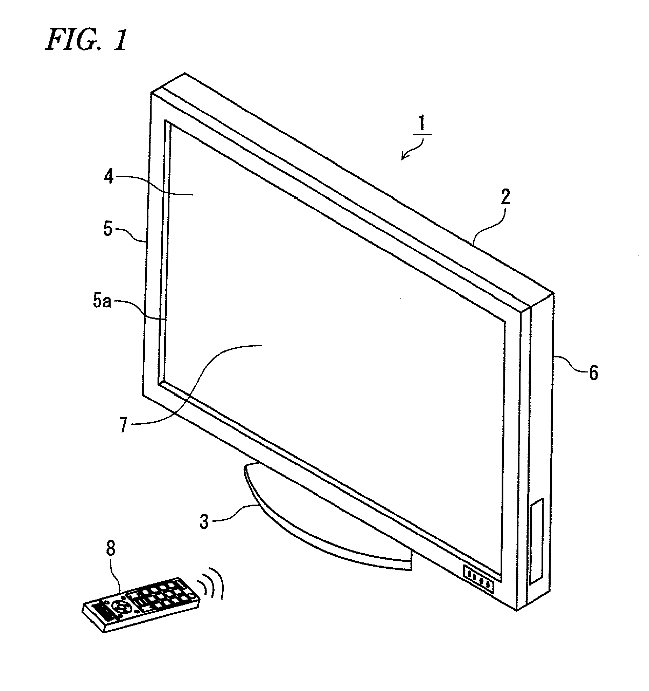

An embodiment will be hereinafter described with reference to the drawings. Fig. 1 is a perspective view showing an appearance of a recording and reproducing apparatus according to the embodiment. The recording and reproducing apparatus 1 is, for example, a digital TV receiver which can receive a digital broadcast program and record and reproduce the received broadcast program and which displays video of a broadcast program on its screen. Alternatively, the recording and reproducing apparatus 1 may be a DVD (digital versatile disc) recorder, a Blu-ray (registered trademark) recorder, or the like which can receive a digital broadcast program and record and reproduce the received broadcast program.

The recording and reproducing apparatus 1 is equipped with a cabinet 2 and a stand 3 which supports the cabinet 2. A display panel 4 such as a liquid crystal panel or a PDP (plasma display panel) is disposed in the cabinet 2 on the front side. A frame (not shown) for supporting the display panel 4 is also disposed in the cabinet 2 behind the display panel 4. The frame is provided with a circuit board for driving the display panel 4 and a power circuit.

The outer surfaces of the cabinet 2 are enclosed by a front cover 5 which covers the front surface and parts of the top surface, the bottom surface, and both side surfaces of the cabinet 2 and a rear cover 6 which covers the back surface and the other parts of the top surface, the bottom surface, and both side surfaces of the cabinet 2. A screen 7 is a display portion, located inside a window 5a of the front cover 6, of the display panel 4.

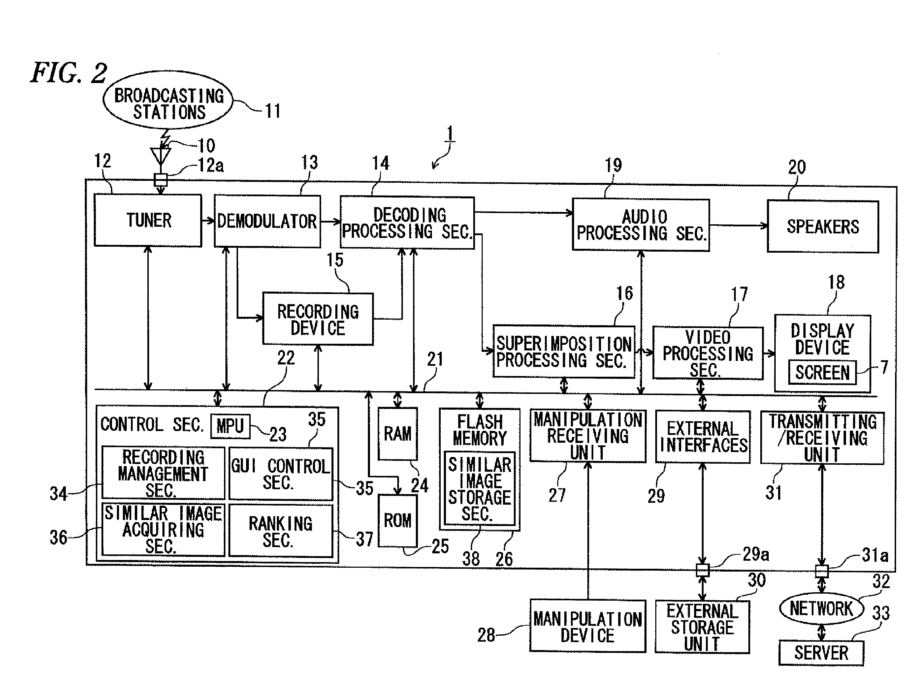

A remote controller 8 is a manipulation device 28 (see Fig. 2) for sending a manipulation signal to a manipulation receiving unit 27 (see Fig. 2) of the recording and reproducing apparatus 1.

Fig. 2 is a block diagram showing the configuration of the recording and reproducing apparatus 1 according to the embodiment. An antenna 10 is a ground-wave digital broadcast antenna or a satellite digital broadcast antenna for receiving broadcast radio waves transmitted from broadcasting stations. A tuner 12 tunes in to a broadcast signal (s) on a desired channel (s) among ground-wave digital broadcast signals, satellite digital broadcast signals, or cable TV broadcast signals. Consisting of plural tuner units, the tuner 12 can tune in to plural broadcast signals simultaneously. An antenna terminal 12a is a terminal to which the antenna 10 is connected.

A demodulator 13 performs demodulation by a method that corresponds to the modulation method of each kind of digital broadcast. A ground-wave digital broadcast signal is demodulated into anMPEG (moving Picture Experts Group) transport stream (TS) by OFDM (orthogonal frequency division multiplexing) demodulation. A satellite digital broadcast signal is demodulated into an MPEG transport stream by PSK (phase shift keying) demodulation. The MPEG transport stream is output to a decoding processing section 14. The demodulator 13 also demodulates an IP broadcast signal that is received from a network 35 such as the Internet through a transmitting/receiving unit 34.

The decoding processing section 14 has functions of an MPEG decoder, a video/audio decoder, etc. The decoding processing section 14 sections the MPEG-TS data supplied from the decoder 13 and decodes data of program information. The decoding processing section 14 decodes video data and audio data by converting a video PES (packetized elementary stream) into a video ES (elementary stream) and converts an audio PES into an audio ES.

Furthermore, the decoding processing section 14 decodes video data and audio data that are input from a recording device 15. Still further, the decoding processing section 14 has a function of decoding video data and audio data that are input from an external recording device 30.

The recording device 15 is a recording means including an HDD (hard disk drive), an SSD (solid-state drive), an ODD (optical disc drive), or the like. The recording device 15 is equipped with an encoder and a decoder for recording and reproducing information. MPEG-TS data is modulated into data having such a format as to be suitable for recording and reproduction forms of the recording device 15 through the encoder and the decoder, and the data is recorded in and reproduced later from the HDD, the SSD, or a disc inserted in the ODD. Reproduced data is decoded by the decoding processing section 14.

A superimposition processing section 16 plane-manages video data supplied from the decoding processing section 14 and data broadcast data transferred via a bus 21 or window drawing data generated by a GUI (graphical user interface) control section 35, superimposes the latter data on the video data supplied from the decoding processing se, and supplies resulting data to a video processing section 17.

The video processing section 17 converts the received video data into data having such a format (the number of pixels, a frame frequency, and a scanning method) as to be displayable by the display device 18 and adjusts the display color arbitrarily, and outputs resulting video data to the display device 18 to display video on its screen 7.

An audio processing section 19 converts digital audio data supplied from the decoding processing section 14 into analog audio signals that can be reproduced by speakers 20 or earphones, and outputs the analog audio signals to the speakers 20 or the earphones to cause reproduction of a sound. The display device 18 and the speakers 20 may be either located outside the recording and reproducing apparatus 1 or incorporated in a cabinet that is separate from the cabinet 2 of the recording and reproducing apparatus 1.

All operations, including the above-described receiving operation, of the recording and reproducing apparatus 1 are supervised by a control section 22. Incorporating an MPU (microprocessing unit) 23, the control section 22 controls the individual components that are connected to it via the bus 21.

A RAM (random access memory) 24 is a read/write memory for storing various kinds of data that are necessary for data processing performed by the control section 22, and operates as a buffer memory for storing video data, pieces of image frame information, etc. A ROM (read-only memory) 25 is stored with control programs etc. to be run by the MPU 23.

A flash memory 26, which is rewritable, is a nonvolatile memory, that is, information stored therein is not lost even if it is powered off. The flash memory 26 has a function of storing recording reservation information, recorded program information, etc. The flash memory 26 also has a function of a similar image storage section 38.

A manipulation receiving unit 27 receives a manipulation signal transmitted from a manipulation device 28 and transfers it to the control section 22. The manipulation device 28 is, for example, the remote controller 8 which uses infrared, Bluetooth (registered trademark), or like wireless communication or a wired or wireless keyboard, and sends out a manipulation signal. The manipulation receiving unit 27 receives a manipulation signal transmitted from the remote controller 8, the keyboard, or the like.

External interfaces 29 are interfaces of USB (universal serial bus), IEEE 1394 (Institute of Electrical and Electronic Engineers 1394), eSATA (external serial ATA (AT attachment)), the SD (secure digital (registered trademark)) memory card, the memory stick (registered trademark), HDMI (high-definition multimedia interface (registered trademark), etc. An external storage device 30 which is (a drive of) a USB memory, a USB external device, an SD memory card, a memory stick, an HDD, an SSD, a CD, a DVD, a Blu-ray (registered trademark) recorder/player, or the like is connected to the external interfaces 29. External storage device terminals 29a are terminals to one of which the external storage device 30 is connected.

The recording and reproducing apparatus 1 can record a broadcast program in the external storage device 30 through the external interfaces 29. The user can select the recording device 15 or the external storage device 30 as a storage device for recording a broadcast program. The recording and reproducing apparatus 1 can play back video information or audio information recorded in the external storage device 30.

The recording and reproducing apparatus 1 is connected to a network 32 such as the Internet via a transmitting/receiving unit 31. As a result, the recording and reproducing apparatus 1 can exchange information with a server 33 or a like apparatus on the network 33 via the transmitting/receiving unit 31. A network terminal 31a is a terminal to which the network 32 is connected.

As shown in Fig. 2, the control section 22 has functions of a recording management section 34, a GUI control section 35, a similar image acquiring section 36, and a ranking section 37. These functions are applications to be run by the MPU 23 of the control section 22 which are usually stored in the ROM 25. When each of these applications is to be used, it is read and run by the MPU 23.

The recording management section 34 manages reservation information of a broadcast program(s) that is set according to a request from the user. The recording management section 34 performs recording processing for a reserved program or a program being viewed. The recording management section 34 manages programs recorded in the recording device 15. More specifically, the recording management section 34 manages pieces of information of recorded programs by recording program information (a broadcasting station name, a broadcast date and time, a program name, a broadcast outline, persons who appear, details of the program, a category of the program, etc.), a recording time slot, whether the recorded program has been played back or not, and other information of each recorded program in the flash memory 26 or the recording device 15. Furthermore, the recording management section 34 performs generation of a recorded program list and processing for playback, deletion, edit, or the like of a recorded program.

The GUI control section 35 generates GUI (graphical user interface) data, which is supplied to the superimposition processing section 16 via the bus 21. In the superimposition processing section 16, the GUI data is, for example, superimposed on video data of a broadcast program or processed into data of a sole GUI picture. Resulting video data is supplied to the video processing section 17.

The similar image acquiring section 36 has a function of detecting, acquiring, or calculating image feature quantities, similar image frames, continuous intervals of similar image frames, overlap intervals of similar image frames, and an overlap number of overlap intervals in ranking processing and storing them in a memory. The ranking processing is processing of detecting pieces of video having high frequencies of appearance (e. g. , pieces of video that appeared in plural broadcast programs) in programs having the same category and ranking the detected pieces of video in descending order of the frequency of appearance.

The similar image acquiring section 36 extracts and acquires image feature quantities of decoded image frames in a prescribed interval when a program is recorded in the recording device 15, searches already recorded programs that were recorded in a past prescribed period and have the same program category as the program being recorded for image frames that are the same or similar in image feature quantities as or to the acquired image frames, and stores pieces of position information and image feature quantities of the thus-found image frames in a memory. This operation is repeated until the end of the program being recorded.

The similar image acquiring section 36 detects a similar image frame continuous interval in which similar image frames continue for a prescribed time or more on the basis of pieces of position information of similar image frames of programs having a specified program category and their image feature quantities that have been accumulated in the above-described manner. If similar image frame continuous intervals are detected in plural programs, positions of overlap intervals and an overlap number are calculated. This operation is repeated for programs having the specified program category that were recorded in the past prescribed period. In this manner, the similar image acquiring section 36 acquires overlap intervals in which similar image frames continue and overlap numbers for the programs having the specified program category that are recorded in the recording device 15.

The ranking section 37 performs ranking processing in which it ranks sets of continuous intervals of similar image frames in descending order of the frequency of appearance on the basis of the overlap intervals and the overlap numbers. That is, the ranking section 37 ranks sets of continuous intervals of similar image frames in descending order of the overlap number on the basis of the overlap intervals (in each of which similar image frames continue) and the overlap numbers acquired by the similar image acquiring section 36. If overlap numbers are the same, a set of continuous intervals of similar image frames having a longer overlap interval is given a higher rank.

The control section 22 has a function of displaying the ranks determined by the ranking section 37 on the screen 7. Furthermore, the control section 22 generates video data of a picture in which thumbnail images of sets of overlap intervals or similar image frame continuous intervals that have been ranked by the ranking section 37 are arranged in descending order of the rank, and supplies the generated video data to the superimposition processing section 16 through the GUI control section 35. The thumbnail images are displayed on the screen when the user presses a rank display button on the remote controller 8. As a result, the user can efficiently play back and view video that has a high frequency of appearance, that is, appeared in plural broadcast programs.

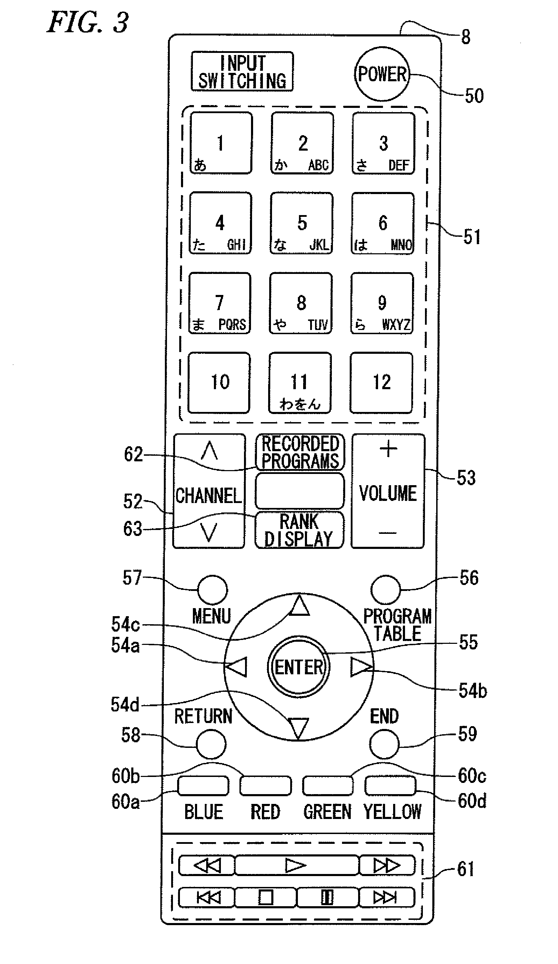

Fig. 3 shows a general appearance of the remote controller 8 used in the embodiment. The remote controller 8 sends a manipulation signal to the manipulation receiving unit 27 of the recording and reproducing apparatus 1 by infrared, Bluetooth (registered trademark), or like wireless communication. A power button 50 serves to power on or off the recording and reproducing apparatus 1. More specifically, the power button 50 is a button for changing the state of the recording and reproducing apparatus 1 from a standby state to an operation state or vice versa.

Tuning buttons 51 are buttons that are assigned numbers "1" to "12" and serve to select a broadcast channel number directly, A channel incrementing/decrementing button 52 a button for changing the selected channel number in the normal or reverse direction. Like the tuning buttons 51, the channel incrementing/decrementing button 52 is used for selecting a broadcast channel. A volume adjustment button 53 is a button for adjusting the sound volume of the speakers 20 in viewing a program.

Cursor buttons 54 are buttons for moving the cursor in various information windows of a GUI picture that is displayed on the screen 7 of the display device 18 or causing movement between selection buttons of various items. The cursor buttons 54 are also called four direction buttons or direction instructing buttons. A leftward cursor button 54a, a rightward cursor button 54b, an upward cursor button 54c, and a downward cursor button 54d are buttons for moving the cursor leftward, rightward, upward, and downward, respectively. An enter button 55 is pressed to decide on a cursor position or a selection button as a destination of movement caused by the cursor buttons 54a-54d.

A program table button 56 is a dedicated manipulation button which is manipulated to display a program table on the screen 7. A menu button 57 is a button which is pressed to display one of various setting menus provided in the recording and reproducing apparatus 1. The user selects a desired setting item from plural items displayed in layered form using the cursor buttons 54a-54d. A return button 59 is a button which is manipulated to return to the picture of a one-step preceding manipulation stage. An end button 59 is a button which is manipulated to finish a series of manipulations.

Four color buttons 60 are a blue button 60a, a red button 60b, a green button 60c, and a yellow button 60d which are arranged in this order from left to right. The four color buttons 60a-60d are used when items that are discriminated from each other by colors are displayed on the screen 7 or display that urges the user to make a selection using colors is made on the screen 7. Recording device manipulation buttons 61 are play, stop, pause, fast feed, fast return, skip-to-next-program, return-to-head, and skip-to-preceding-program buttons which are used in playing back a program recorded in the recording device 15 of the recording and reproducing apparatus 1. A recorded programs button 62 is a button which is manipulated to display a program table of recorded programs on the screen 7. A rank display button 63 is a button which is manipulated to display an automatic ranking picture showing video scenes having high frequencies of appearance of news and tabloid TV programs.

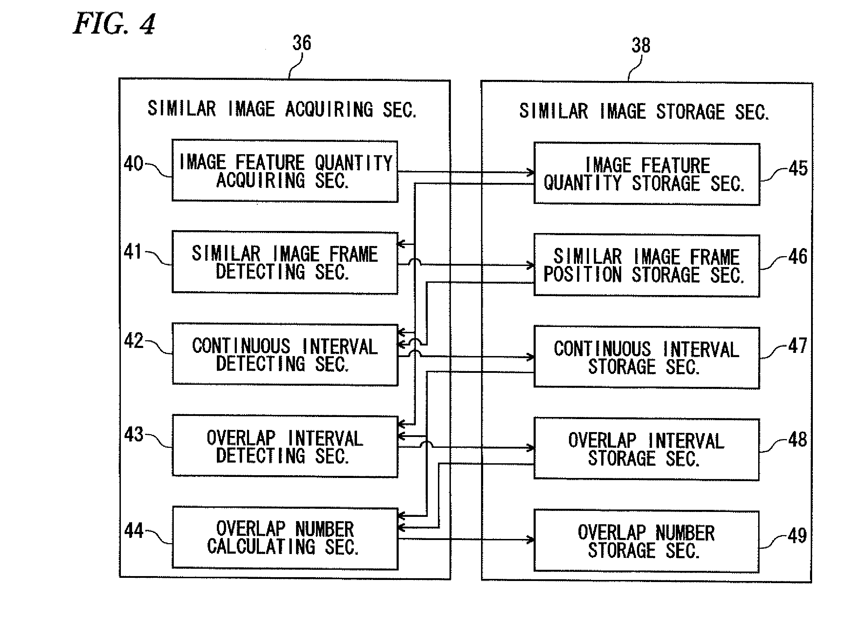

Fig. 4 is a functional block diagram of the similar image acquiring section 36. The similar image acquiring section 36 is composed of an image feature quantity acquiring section 40, a similar image frame detecting section 41, a continuous interval detecting section 42, an overlap interval detecting section 43, and an overlap number calculating section 44.

When a program is recorded in the recording device 15, the image feature quantity acquiring section 40 extracts and acquires image feature quantities of image frames in a prescribed interval decoded by the decoding processing section 14. Any of known methods such as a method for extracting and acquiring an image color histogram, a method for extracting and acquiring a SIFT (scale invariant feature transform) feature quantity, and a method for extracting and acquiring a HOG (histograms of oriented gradients) feature quantity may be employed as appropriate as the method for extracting and acquiring image feature quantities. The image feature quantities acquired by the image feature quantity acquiring section 40 are temporarily stored in the RAM 24 and then stored in an image feature quantity storage section 45 of a similar image storage section 38 of the flash memory 26.

The similar image frame detecting section 41 detects and acquires image frames that are the same or similar in image feature quantities as or to the acquired image frames from already recorded programs that were recorded in a past prescribed period and have the same program category as the program being recorded. The similar image frame detecting section 41 performs this operation until the end of the program being recorded. Pieces of position information of the similar image frames that are the same or similar in image feature quantities are temporarily stored in the RAM 24 and then stored in a similar image frame position storage section 46 of the similar image storage section 38 of the flash memory 26.

Program categories are categories corresponding program contents, subjects, etc. For example, the ground-wave digital broadcast employ program categories "news," "sports," "information/tabloid," "drama," "music," "variety show," "movie," "animation/special effects," "documentary/culture," "theater/public performance," "hobby/education," "welfare," and "others," and category information is contained in program information. To view video having a high frequency of appearance, the user can specify one of the above program categories.

The continuous interval detecting section 42 detects a similar image frame continuous interval in which similar image frames continue for a prescribed time or more on the basis of pieces of position information of similar image frames of programs and their image feature quantities that have been accumulated in the above-described manner. The prescribed time is about 5 seconds or 10 seconds, for example. Where the prescribed time is 5 seconds, a similar image frame continuous interval in which similar image frames continue for 5 seconds or more is detected. Plural such continuous intervals may exist in a single program. And plural such continuous intervals may exist in different programs having a specified category. The continuous interval detecting section 42 detects and acquires continuous interval information for each program having the category specified by the user. Acquired pieces of continuous interval information are temporarily stored in the RAM 24 and then stored in a continuous interval storage section 47 of the similar image storage section 38 of the flash memory 26.

If continuous intervals of similar image frames that are similar in image feature quantities are detected in plural programs having a specified program category, an overlap interval detecting section 43 detects positions of overlap intervals on the basis of the image feature quantities and the pieces of continuous interval information. For example, where the program category is "news," there frequently occurs a situation that pieces of news of the same topic that use the same video source are broadcast as parts of plural news programs. The overlap interval detecting section 43 detects and acquires positions of overlap intervals of such similar image frame continuous intervals. The acquired overlap intervals are temporarily stored in the RAM 24 and then stored in an overlap interval storage section 48 of the similar image storage section 38 of the flash memory 26.

An overlap number calculating section 44 calculates an overlap number of each set of overlap intervals on the basis of the pieces of continuous interval information and the pieces of overlap interval information. For example, if pieces of news of a certain topic are broadcast as parts of five news programs and similar image frame continuous intervals of the five pieces of news overlap with each other, the overlap number of overlap intervals is "5 . " If pieces of news of another topic are broadcast as parts of four news programs and similar image frame continuous intervals of the four pieces of news overlap with each other, the overlap number of overlap intervals is "4." However, if the pieces of news of the other topic are broadcast as the parts of the four news programs but similar image frame continuous intervals of only three pieces of news overlap with each other, the overlap number of overlap intervals is "3." The acquired overlap number is temporarily stored in the RAM and then stored in an overlap number storage section 49 of the similar image storage section 38 of the flash memory 26.

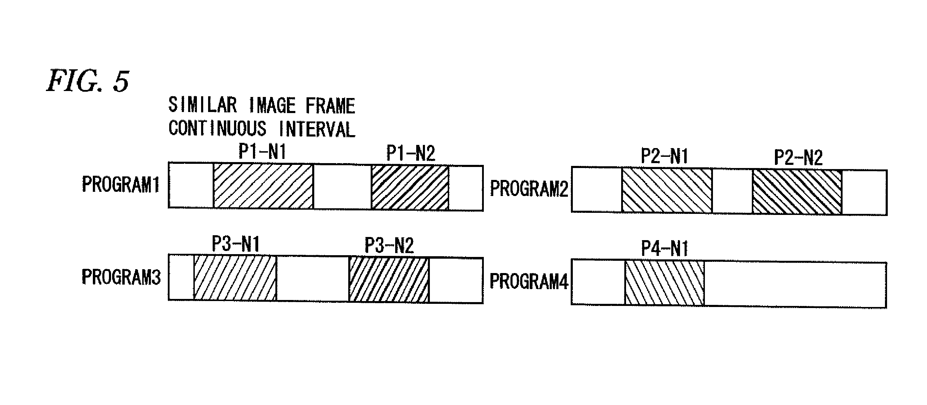

Fig. 5 shows example continuous intervals of similar image frames in which program-1 to program-4 having the same program category are recorded in the recording device 15. Symbol P1-N1 denotes one similar image frame continuous interval relating to topic N1 in program-1 (P1). Symbol P1-N2 denotes another similar image frame continuous interval relating to topic N2 (different from topic N1) in program-1 (P1). For example, the continuous intervals P1-N1 and P1-N2 relate to news topics N1 and N2 of a news program-1, respectively.

Symbol P2-N1 denotes one similar image frame continuous interval relating to topic N1 (the same as topic N1 in the continuous interval P1-N1) in program-2 (P2). Symbol P2-N2 denotes another similar image frame continuous interval relating to topic N2 (the same as topic N2 in the continuous interval P1-N2) in program-2 (P2). For example, the continuous intervals P2-N1 and P2-N2 relate to the news topic N1 (the same as the news topic N1 of the news program-1) and the news topic N2 (the same as the news topicN2 of the news programs-1) of a news program-2, respectively.

Likewise, symbol P3-N1 denotes one similar image frame continuous interval relating to topic N1 in program-3 (P3). Symbol P3-N2 denotes another similar image frame continuous interval relating to topic N2 in program-3 (P3) . For example, the continuous intervals P3-N1 and P3-N2 relate to the news topic N1 and the news topic N2 of a news program-3, respectively.

Symbol P4-N1 denotes a similar image frame continuous interval relating to topic N1 in program-4 (P4). For example, the continuous interval P3-N1 is a continuous interval relating to a news topic N1 of a news program-4.

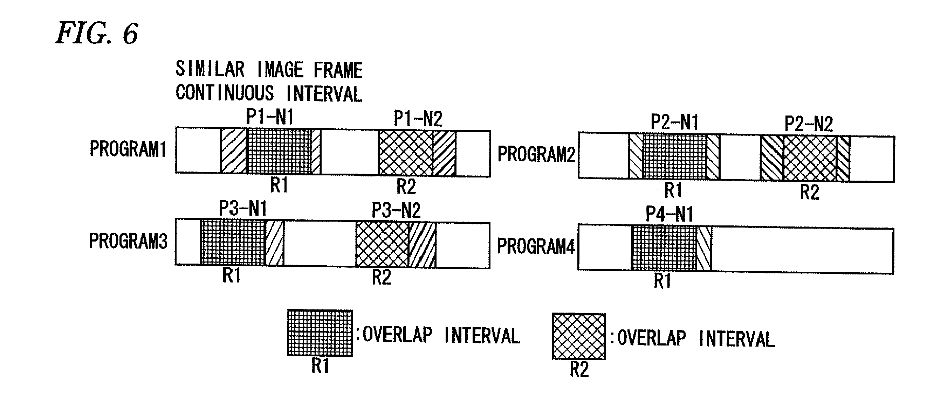

Fig. 6 illustrates the overlap intervals and the overlap number. The continuous intervals P1-N1, P2-N1, P3-N1, and P4-N1 shown in Fig. 5 relate to the same topic or scene and include overlap intervals R1 where their image feature quantities are identical or similar to each other. In this example, the overlap number is "4." The continuous intervals P1-N2, P2-N2, and P3-N2 relate to the same topic or scene and include overlap intervals R2 where their image feature quantities are identical or similar to each other. In this example, the overlap number is "3."

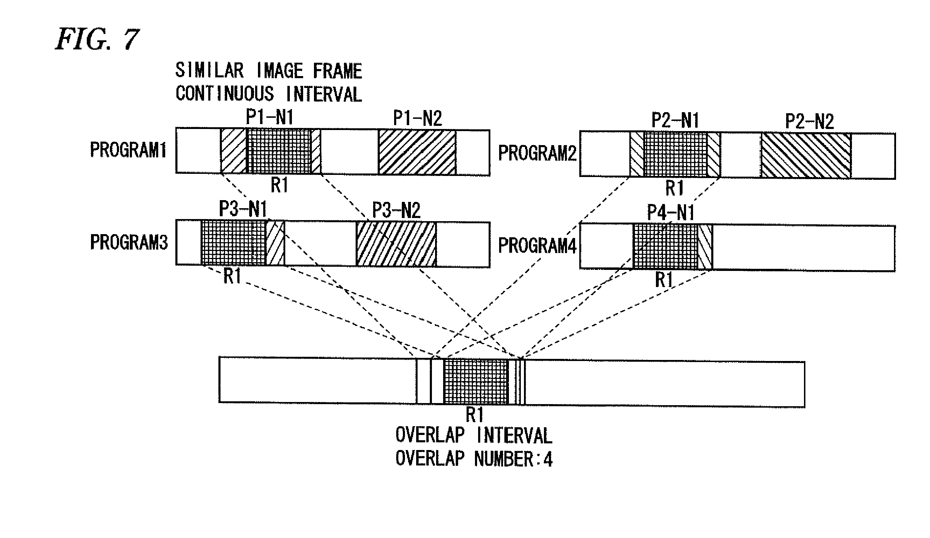

Fig. 7 is another chart illustrating the overlap intervals and the overlap number. Fig. 7 shows positional relationships between the continuous intervals P1-N1, P2-N1, P3-N1, and P4-N1 in a case that the positions of their overlap intervals R1 are made the same.

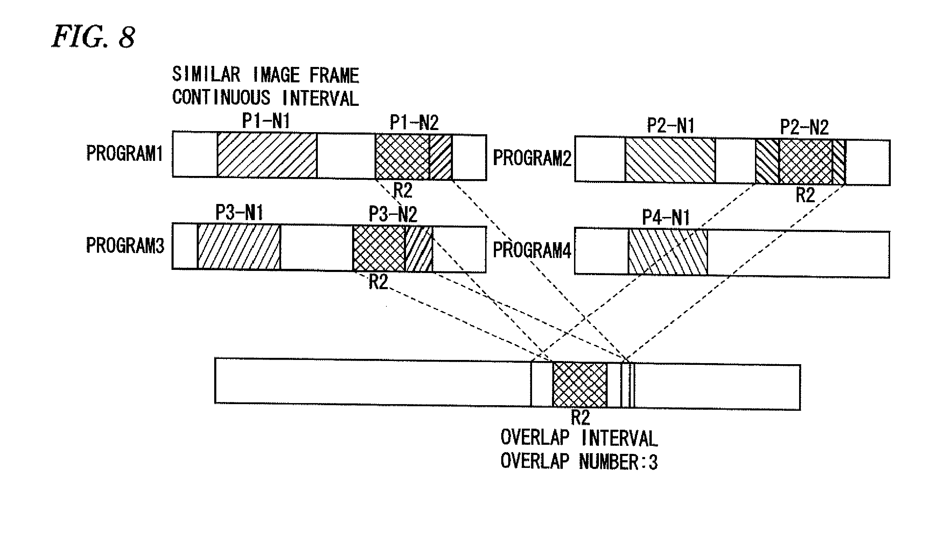

Fig. 8 is a further chart illustrating the overlap intervals and the overlap number. Fig. 8 shows positional relationships between the continuous intervals P1-N2, P2-N2, and P3-N2 in a case that the positions of their overlap intervals R2 are made the same.

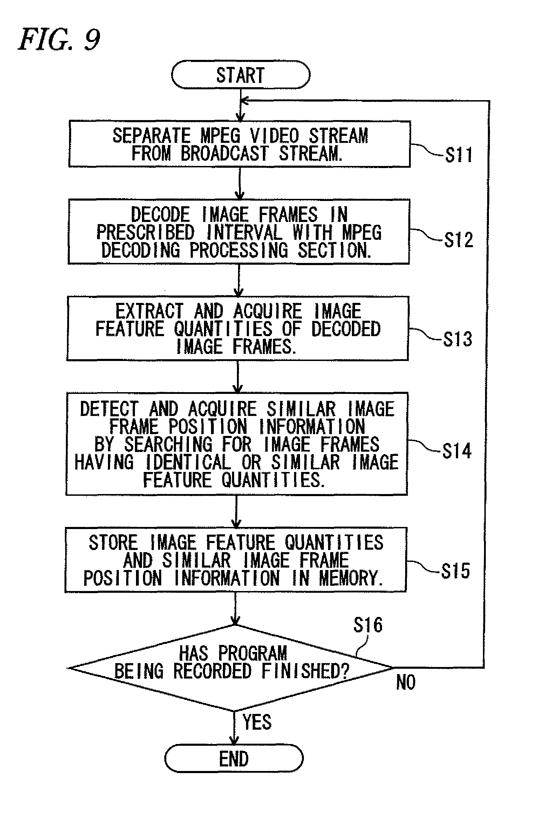

Fig. 9 is a flowchart of an example similar image frame detection process. This similar image frame detection process is started when recording of a broadcast program in the recording device 15 is started. Alternatively, this similar image frame detection process may be started after a broadcast program was recorded in the recording device 15 or when the rank display button 63 of the remote controller 8 is pressed.

At step S11, the decoder 13 separates anMPEG video stream from a broadcast stream. At step S12, the decoding processing section 14 decodes image frames in a prescribed interval.

At step S13, the image feature quantity acquiring section 40 extracts and acquires image feature quantities of the decoded image frames. At step S14, the similar image frame detecting section 41 detects and acquires similar image frame position information by searching for image frames that are the same or similar in image feature quantities as or to the acquired image frames from already recorded programs that were recorded in a past prescribed period and have the same program category as the program being recorded.

At step S15, the image feature quantity acquiring section 40 and the similar image frame detecting section 41 store the image feature quantities and the similar image frame position information in the flash memory 26. At step S16, the similar image frame detecting section 41 judges whether or not the program being recorded has finished. The process is finished if the program being recorded has finished, and returns to step S11 if the program being recorded has not finished yet.

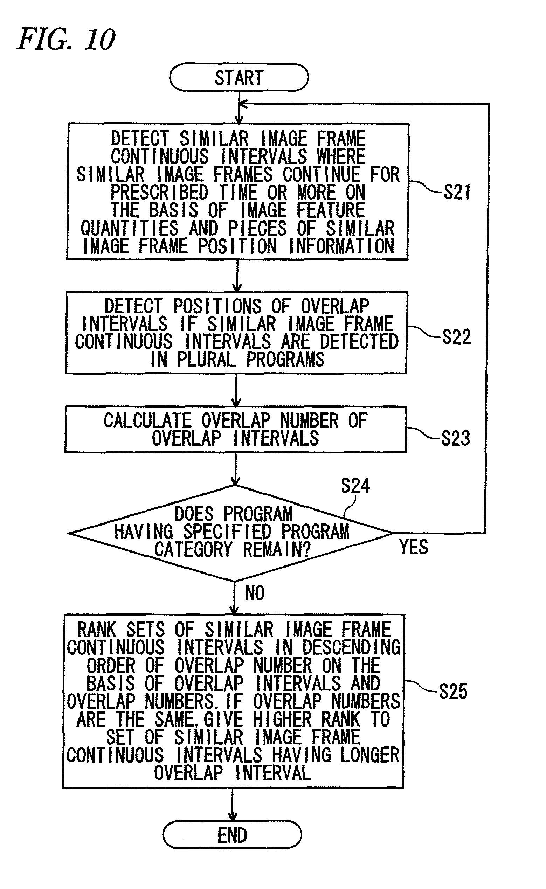

Fig. 10 is a flowchart of an example ranking process. The raking process is started when the rank display button of the remote controller 8 is pressed. Alternatively, the raking process may be started when ranking is selected from a setting menu that is shown upon pressing of the menu button 57.

At step S21, the continuous interval detecting section 42 detects similar image frame continuous intervals where similar image frames continue for a prescribed time or more on the basis of the image feature quantities of the similar image frames and the pieces of similar image frame position information, for each program having a program category specified by the user.

At step S22, if continuous intervals of similar image frames that are similar in image feature quantities are detected in plural programs having the specified program category, the overlap interval detecting section 43 detects positions of overlap intervals on the basis of the image feature quantities and the pieces of continuous interval information. At step S23, the overlap number calculating section 44 calculates an overlap number of the overlap intervals on the basis of the pieces of continuous interval information and the pieces of overlap interval information.

At step S24, the continuous interval detecting section 42 judges whether or not there remains a program having the specified program category and recorded in the past prescribed period. The process returns to step S21 if such a program remains, and moves to step S25 if no such program remains.

At step S25, the ranking section 37 ranks sets of similar image frame continuous intervals in descending order of the overlap number on the basis of the overlap intervals and the overlap numbers. If overlap numbers are the same, a set of similar image frame continuous interval having a longer overlap interval is given a higher rank.

The user can specify a program category for ranking processing. At the time of product shipment, all program categories are set as program categories for ranking processing. Although at the time of product shipment a setting is made so that commercials (advertisement broadcast items) are not subjected to the above-described processing, commercials may also be subjected to the above-described processing. Plural broadcasting stations employ almost the same video for each commercial and commercials are broadcast at high frequencies. Therefore, if commercials are subjected to the above-described processing, it is highly probable that commercials occupy most of sets of similar image frame continuous intervals having high ranks.

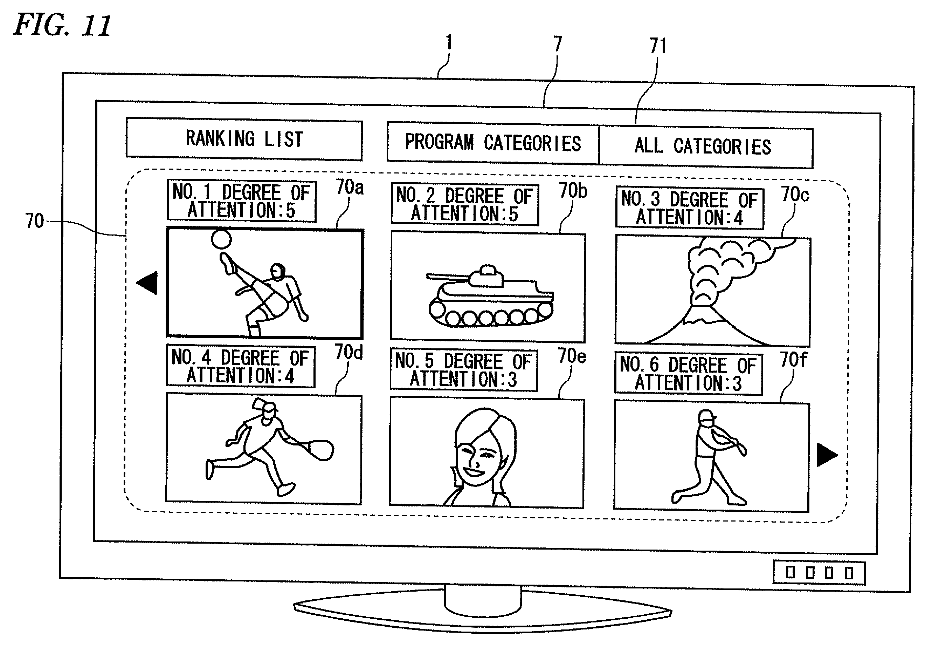

Fig. 11 shows a picture displayed on the screen 7 in which thumbnails 70 of pieces of video including ranked overlap intervals are arranged in order of their ranks. When the user presses the rank display button 63 of the remote controller 8 and specifies a program category, the thumbnails 70 of overlap intervals are displayed on the screen 7. As a result, the user can efficiently play back and view video having a high frequency of appearance such as video that was broadcast as parts of plural programs.

Thumbnails 70a-70f have first to sixth ranks, respectively. The term "degree of attention" means the overlap number. A program category display window 71 is a window in which a program category(s) for ranking processing is displayed. In the example of Fig. 11, "all categories" is displayed in the window 71, which means that programs of all categories except for commercials are subjected to the above-described processing.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A recording and reproducing apparatus comprising:
an image feature quantity acquiring section configured to acquire image feature quantities of image frames of programs;
a similar image frame detecting section configured to detect similar image frames that are identical or similar to each other in image feature quantities from the image frames of the programs;
an overlap interval detecting section configured to detect overlap intervals of continuous intervals where similar image frames continue of recorded programs; and
an overlap number calculating section configured to calculate an overlap number of each of sets of overlap intervals.

2. The recording and reproducing apparatus according to claim 1, further comprising
a ranking section configured to rank the sets of overlap intervals according to their respective overlap numbers.

3. The recording and reproducing apparatus according to claim 2, further comprising
a rank displaying section configured to display ranks, determined by the ranking section, of the respective sets of overlap intervals on a screen.

4. The recording and reproducing apparatus according to claim 7., wherein
in a case that similar image frame continuous intervals are detected from plural programs having a specified program category, the overlap interval detecting section detects positions of overlap intervals of the similar image frame continuous intervals on the basis of image feature quantities and pieces of continuous interval information.

5. The recording and reproducing apparatus according to claim 2, wherein
the ranking section ranks the sets of overlap intervals in descending order of the overlap number.

6. The recording and reproducing apparatus according to claim 5, wherein
in a case that there exist overlap intervals having the same overlap number, the ranking section gives a higher rank to a longer overlap interval.

7. The recording and reproducing apparatus according to claim 3, wherein
the rank displaying section displays thumbnail images of the overlap intervals on the screen in such a manner that they are arranged in order of their ranks.

8. A recording and reproducing method of a recording and reproducing apparatus capable of recording and reproducing a program, comprising:
acquiring image feature quantities of image frames of programs;
detecting similar image frames that are identical or similar to each other in image feature quantities from the image frames of the programs;
detecting overlap intervals of continuous intervals where similar image frames continue of recorded programs; and
calculating an overlap number of each of sets of overlap intervals.

9. The recording and reproducing method according to claim 8, further comprising
the step of ranking the sets of overlap intervals according to their respective overlap numbers.
